# EUROPEAN PATENT APPLICATION

(11) **EP 3 435 119 A1**
(43) Date of publication of application: **30.01.2019**
(21) Application number: 16895462.6
(22) Date of filing: 27.06.2016
(51) Int. Cl.: G01T 1/169, G01T 1/167, G01T 1/20, G01T 1/24, G01T 7/00

(54) **RADIOACTIVE CONTAMINATION INSPECTION DEVICE**

(30) Priority: 25.03.2016 JP 2016061907
(71) Applicant: Mitsubishi Electric Plant Engineering Corporation, Tokyo 110-0015 (JP)
(72) Inventor: KAKIUCHI, Hideaki, Tokyo 110-0015 (JP); HAMAMOTO, Hiroshi, Tokyo 110-0015 (JP); MATSUO, Keiichi, Tokyo 110-0015 (JP); HAYASHI, Masateru, Tokyo 100-8310 (JP); AZUMA, Tetsushi, Tokyo 100-8310 (JP); NISHIZAWA, Hiroshi, Tokyo 100-8310 (JP); SASANO, Makoto, Tokyo 100-8310 (JP)
(74) Representative: Patentanwälte Geyer, Fehners & Partner mbB
(86) International application number: PCT/JP2016/068963
(87) International publication number: WO 2017/163437

(57) **Abstract**

Provided is a radioactive contamination inspection device, including: a detection unit having a sensitive surface that has a shape conforming to a shape of an object surface, which is a measurement target and a radioactive contamination amount of which is to be measured; a mechanism unit for holding the detection unit in a state in which a distance from the sensitive surface to the object surface falls within a desired range set in advance; and a measurement unit for calculating the radioactive contamination amount of the object surface on the basis of a measurement result from the detection unit.

## Description

### Technical Field

This invention relates to a device for detecting a radiation to inspect the presence/absence of radioactive contamination of an object, and more particularly, to a radioactive contamination inspection device that takes a case where a transport vehicle evacuates from a controlled area, such as decommissioning sites and interim storage facilities, into account.

### Background Art

The Ordinance on Prevention of Ionizing Radiation Hazards regulates that a controlled area is set when radiation exceeding a given value is treated, and contamination by radiation is inspected when articles are carried out of the controlled area. Thus, article inspection monitors are used in nuclear-related facilities.

Also in decommissioning sites and interim storage facilities, the inspection of radioactive contamination is needed when transport vehicles evacuate from a controlled area. In this case, a measurement target is large and cannot be inspected by an article inspection monitor, and hence a method of measuring radiation while scanning a vehicle body radiation by a β-ray survey meter is employed.

However, this method takes a long time to accurately inspect a large vehicle. Thus, in a facility through which a large number of large vehicles enter and exit, such as interim storage facilities, contamination inspection of such vehicles is a bottleneck in the entire work.

To reduce the work time, radioactive contamination inspection of a vehicle body surface using a gamma camera or an automatic inspection device for automatically scanning a large radiation detector has been proposed (see, for example, PTL 1 to 4).

PTL 1 discloses a method of measuring a radioactive concentration (surface contamination density) of a surface of an object to be measured by using a detector sensitive to α-rays or β-rays. PTL 2 discloses a method in which in order to inspect a measurement target having a complicated shape, the measurement is performed by placing the measurement target in a container formed of a deformable scintillation detector.

PTL 3 discloses a method of detecting characteristic X-rays emitted in response to decay of radioactive cesium and measuring a radioactive concentration of a surface to be measured or the inside of a measurement target. PTL 4 discloses a method of using a γ-ray (X-ray) camera in which elements sensitive to γ-rays or X-rays are arranged in an array to measure a radioactive concentration (surface contamination density) of an object surface.

Other conventional technologies are a plastic scintillator capable of measuring a radiation uniformly with high sensitivity in the entire detection unit (large area) and an optical fiber larger area radiation monitor (see, for example, PTL 5). PTL 5 employs a method in which light emitted from a plastic scintillator is condensed by an optical fiber, and the plastic scintillator and the optical fiber are formed so as to conform to the shape of an object to be measured, thereby measuring a radiation from the object to be measured having a curved shape.

### Citation List

### Patent Literature

[PTL 1] Japanese Patent Application Publication No. 2005-172771
[PTL 2] Japanese Patent No. 5669782
[PTL 3] Japanese Patent Application Publication No. 2015-180872
[PTL 4] Japanese Patent No. 5400988
[PTL 5] Japanese Patent Application Publication No. H09-243752

### Summary of Invention

### Technical Problem

However, the conventional technology has the following problems.

Various methods as described above have been proposed for the detection of surface contamination by radiation. However, most of the methods are methods for grasping a radiation amount by condensing scintillation light emitted by reaction between a radiation and a substance.

In this method, a detector, a condensing device, and a photoelectron converter are increased in size and are difficult to be made physically close to a narrow portion, and accurate radiation measurement of an object to be measured having a complicated shape is difficult. Thus, for example, when a measurement target is a narrow site, such as a vehicle wheel well and a vehicle bottom surface, or a surface having a complicated shape, such as a mixer truck, radioactive contamination cannot be inspected by the above-mentioned conventional methods disclosed in PTL 1 to 4.

As described in PTL 5, a laminated plastic scintillator or a radiation detection optical fiber in which the shape of a sensitive region can be deformed in order to perform surface contamination inspection of a narrow portion or a curved surface has been proposed. However, the measurement target is γ-rays, and is affected by an environmental radiation, and hence there is a problem in that a detection limit cannot be set to be sufficiently lower than a reference value.

In particular, at a location where an environmental radiation amount is high, inspecting radioactive contamination of a surface to be measured requires a shield body for blocking γ-rays entering a detector from other than the measurement target. Thus, surface contamination in a narrow site or a complicated, labyrinthine shape is difficult.

For a radiation detector using laminated plastic scintillators or optical fibers, light needs to be reliably blocked, and condensing efficiency is low, and hence it is difficult to achieve a practically available level.

Also in the case where a GM survey meter for surface contamination inspection is used, accurate radiation measurement requires sufficient shielding in order to distinguish between a radiation from a contaminated matter in a region to be measured and an environmental radiation derived from a contaminated matter existing in environments. Thus, surface contamination inspection in a narrow site or a complicated, labyrinthine shape is difficult.

This invention has been made in order to solve the problems as described above, and it is an object thereof to provide, for example, a radioactive contamination inspection device capable of efficiently performing contamination inspection of a narrow portion which has a complicated shape and for which it is difficult for a general radiation detector to be made close, such as a wheel well of a vehicle and a vehicle bottom surface.

### Solution to Problem

A radioactive contamination inspection device according to this invention includes: a detection unit having a sensitive surface that has a shape conforming to a shape of an object surface, which is a measurement target and a radioactive contamination amount of which is to be measured; a mechanism unit for holding the detection unit in a state in which a distance from the sensitive surface to the object surface falls within a desired range set in advance; and a measurement unit for calculating the radioactive contamination amount of the object surface on the basis of a measurement result from the detection unit.

### Advantageous Effects of Invention

According to this invention, the radioactive contamination inspection device has a configuration in which the detection unit having the sensitive surface that has the shape conforming to the shape of the object surface of which the radioactive contamination amount is to be measured can be held in the state in which the distance from the sensitive surface to the object surface falls within the desired range. Such a configuration enables the thickness of a measurer to be thinner than hitherto, and enables the area and shape of a semiconductor detector necessary for securing detection efficiency to be selected correspondingly to detection efficiency of a measurement target. Consequently, for example, a radioactive contamination inspection device capable of efficiently performing contamination inspection of a narrow portion which has a complicated shape and for which it is difficult for a general radiation detector to be made close, such as a wheel well of a vehicle and a vehicle bottom surface, can be provided.

### Brief Description of Drawings

Fig. 1 is an explanatory diagram of a region to be inspected corresponding to a region A in Embodiment 1 of this invention.
Fig. 2 is an explanatory diagram related to a radioactive contamination inspection device including a detector for measuring the region A in Embodiment 1 of this invention.
Fig. 3 is an explanatory diagram of a region to be inspected corresponding to a region B in Embodiment 1 of this invention.
Fig. 4 is an explanatory diagram related to a radioactive contamination inspection device including a detector for measuring the region B in Embodiment 1 of this invention.
Fig. 5 is an explanatory diagram of a region to be inspected corresponding to a region C in Embodiment 1 of this invention.
Fig. 6 is a diagram illustrating a configuration of a radioactive contamination inspection device in Embodiment 2 of this invention.
Fig. 7 is a diagram illustrating another configuration of the radioactive contamination inspection device in Embodiment 2 of this invention.
Fig. 8 is a diagram illustrating a configuration example of a detector unit in Embodiment 2 of this invention.
Fig. 9 is a diagram illustrating a configuration example of the detector unit used in Embodiment 2 of this invention.
Fig. 10 is a diagram illustrating a relation between the depth from an incident surface and reflectivity when a measurement target is radioactive cesium in Embodiment 2 of this invention.
Fig. 11 is a circuit diagram in a case where CdTe is employed as a semiconductor element in Embodiment 2 of this invention.
Fig. 12 is a diagram illustrating an example of a relation between a carrier generation position (depth from incident surface) and a movement time for carriers to reach an electrode in Embodiment 2 of this invention.
Fig. 13 is a diagram illustrating characteristics of an output pulse from a semiconductor element in Embodiment 2 of this invention.
Fig. 14 is a diagram illustrating frequency characteristics of a bandpass filter in Embodiment 2 of this invention.
Fig. 15 is a diagram illustrating an energy region of a semiconductor element 101 after passing through the bandpass filter in Embodiment 2 of this invention.
Fig. 16 is a diagram illustrating a commonly-used energy window.
Fig. 17 is a diagram illustrating a configuration example in a case where a scintillator is used as a detector unit in Embodiment 3 of this invention.
Fig. 18 is a diagram illustrating another configuration example in the case where a scintillator is used as a detector unit in Embodiment 3 of this invention.

### Description of Embodiments

Preferred embodiments of a radioactive contamination inspection device of this invention are described below with reference to the drawings.

### Embodiment 1.

In Embodiment 1, description is given on the assumption that measurement targets are transport vehicles (hereinafter simply referred to as "vehicles") that evacuate from a controlled area, such as decommissioning sites and interim storage facilities.

First, specific regions to be inspected in this invention related to a vehicle for which radioactive contamination is to be measured are described with reference to the drawings. The regions to be inspected of the vehicle in Embodiment 1 are roughly divided into the following three regions.
Region A: wheel vertical surface A1, wheel top surface A2, top surface A3 of wheel well, and inner vertical surface A4 of wheel well for front wheel
Region B: wheel vertical surface B1, wheel top surface B2, top surface B3 of wheel well, and inner vertical surface B4 of wheel well for rear wheel
Region C: vehicle bottom surface C1

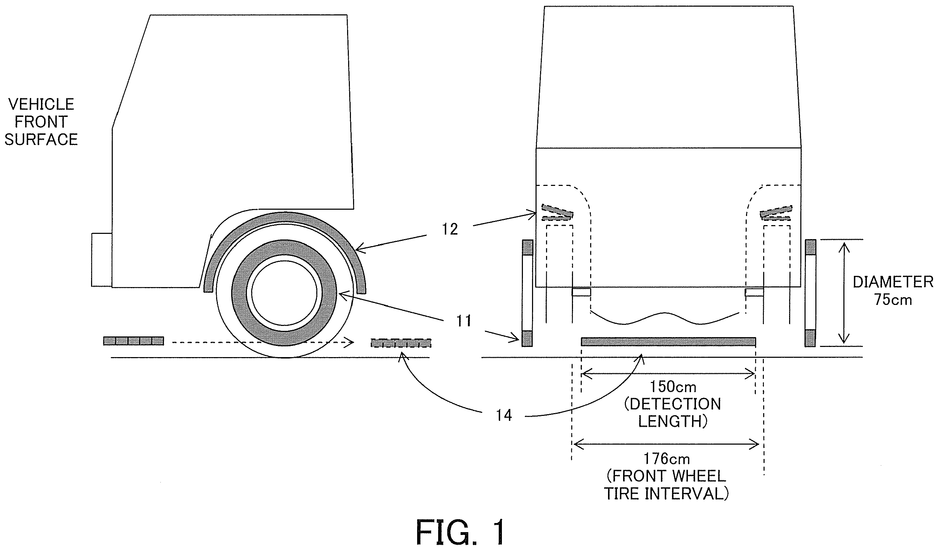

Fig. 1 is an explanatory diagram of a region to be inspected corresponding to the region A in Embodiment 1 of this invention. Fig. 1 illustrates a side view including a front wheel part and a front view, and exemplifies respective surfaces corresponding to A1 to A4 and the shapes of detectors.

The wheel vertical surface A1 corresponds to an outer vertical surface of the front wheel. By using a circular detector 11, radioactive contamination of the wheel vertical surface A1 is quantitatively measured. The wheel top surface A2 corresponds to a surface of the front wheel that comes contact with a traveling surface. By using a semi-circular detector 12, radioactive contamination of the wheel top surface A2 is quantitatively measured.

Radioactive contamination of the top surface A3 of the wheel well and the inner vertical surface A4 of the wheel well is quantitatively measured by using the same semi-circular detector 12 as that used to measure the wheel top surface A2. The semi-circular detector 12 is inclined to measure the inner vertical surface A4 of the wheel well as illustrated in Fig. 1.

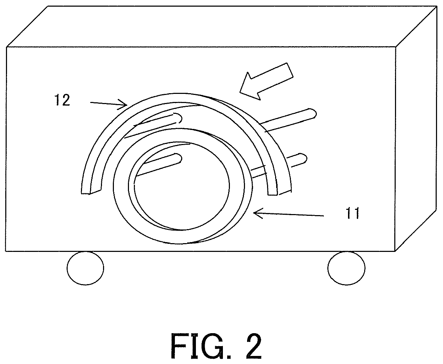

Fig. 2 is an explanatory diagram of the radioactive contamination inspection device including the detectors 11 and 12 for measuring the region A in Embodiment 1 of this invention. The detectors 11 and 12 are set to the front wheel by manually pushing an arm portion illustrated in Fig. 2. Each of the detectors 11 and 12 needs to be disposed on the front wheel such that a distance to a surface to be measured is equal to or smaller than a given value defined in advance.

The detector lengths of the detectors 11 and 12 are roughly as follows in the case of the vehicle illustrated in Fig. 1.
Detector length of detector 11: 75 cm (diameter) × π = 236 cm
Detector length of detector 12: 110 cm (diameter) × π/2 = 173 cm

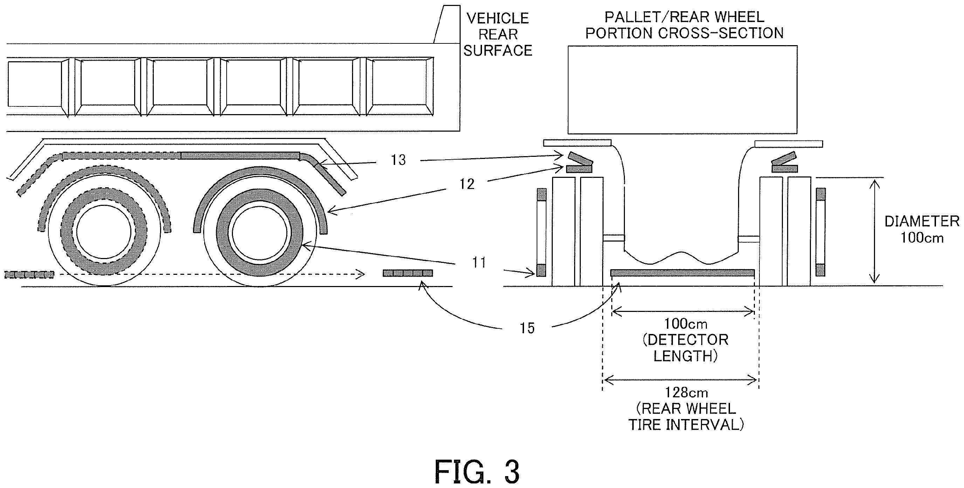

Next, Fig. 3 is an explanatory diagram of a region to be inspected corresponding to the region B in Embodiment 1 of this invention. Fig. 3 illustrates a side view including a rear wheel portion and a rear view, and exemplifies respective surfaces corresponding to B1 to B4 and the shapes of the detectors.

As illustrated in Fig. 3, the rear wheels are double wheels in the traveling direction, and each of the right and left rear wheels are double in the width direction. Thus, in the measurement of the rear wheels, radioactive contamination amounts need to be measured for eight tires in total.

The wheel vertical surface B1 corresponds to an outer vertical surface of the rear wheel. Similarly to the front wheel, the circular detector 11 is used to quantitatively measure radioactive contamination of the wheel vertical surface B1. The wheel top surface B2 corresponds to a part of the rear wheel that comes into contact with a traveling surface. Similarly to the case of the front wheel, the semi-circular detector 12 is used to quantitatively measure radioactive contamination of the wheel top surface B2.

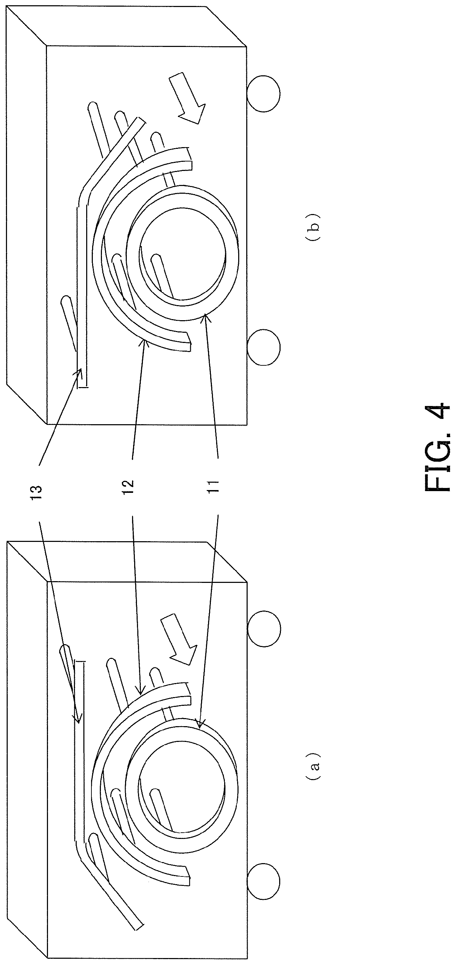

Radioactive contamination of the top surface B3 of the wheel well and the inner vertical surface B4 of the wheel well is quantitatively measured by using a detector 13 that can be manually changed into a shape turned down at the corner as illustrated in Fig. 3 and Fig. 4 referred to later. The detector 13 can be bent into shapes turned down at different corners between the shape used to inspect the rear wheels on the front and the shape used to inspect the rear wheels on the rear, and hence inspection is performed twice while deforming the shape into individual shapes.

As illustrated in Fig. 3, the double rear wheels in the width direction can be collectively inspected by the detector 12. The detector 13 is inclined to measure the inner vertical surface B4 of the wheel well.

Fig. 4 is an explanatory diagram of the radioactive contamination inspection device including the detectors 11, 12, and 13 for measuring the region B in Embodiment 1 of this invention. The rear wheels have different shapes of the wheel wells between the front side and the rear side. Fig. 4(a) is an explanatory diagram of the front side, and Fig. 4(b) is an explanatory diagram of the rear side.

The detectors 11, 12, and 13 are set to the rear wheel by manually pushing an arm portion as illustrated in Fig. 4. Each of the detectors 11, 12, and 13 needs to be disposed on the rear wheel such that a distance to a surface to be measured is equal to or smaller than a given value defined in advance.

The detector lengths of the detectors 11 and 12 are the same as in the case of the front wheels, and the detector length of the detector 13 is roughly as follows.
Detector length of detector 13: 150 cm

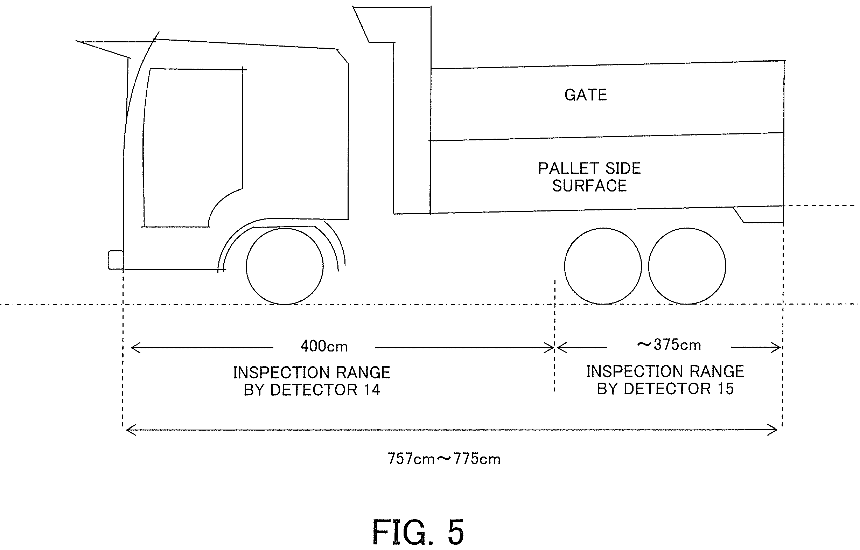

Next, Fig. 5 is an explanatory diagram of a region to be inspected corresponding to the region C in Embodiment 1 of this invention. A tire interval between the front wheels is 176 cm in the example illustrated in Fig. 1. On the other hand, a tire interval between the rear wheels is 128 cm in the example illustrated in Fig. 3. Thus, in Fig. 5, the region C is inspected by being divided into two, that is, the front side of the rear wheels and the rear side including the rear wheels.

The front side of the vehicle bottom surface is inspected by using the detector 14 illustrated in Fig. 1 referred to above, and the rear side of the vehicle bottom surface is inspected by using the detector 15 illustrated in Fig. 3 referred to above. The detector lengths of the detectors 14 and 15 are roughly as follows as illustrated also in Fig. 1 and Fig. 3.
Detector length of detector 14: 150 cm
Detector length of detector 15: 100 cm

For the inspection using the detectors 14 and 15, a distance sensor is mounted for each detector block, and an average distance between the detector and the vehicle bottom surface is calculated by the distance sensor for each given traveling distance. Then, distance correction of the count rate is performed to calculate a surface contamination location.

For the inspection of the vehicle bottom surface, the following second method may be employed. In the second method, instead of using the detectors 14 and 15, detectors are disposed at equal intervals on the ground at a vehicle stop position to measure the count rate. In this case, a distance sensor is mounted for each detector block, and an average distance between the detector and the vehicle bottom surface is calculated by the distance sensor. Then, distance correction of the count rate is performed to calculate a surface contamination value.

In the above-mentioned detectors 11 to 15, in order to support inspection targets having various shapes, a plurality of compact and thin radiation detectors (for example, semiconductor detectors) can be arranged to secure detection efficiency. At the same time, in the detectors 11 to 15, a plurality of compact and thin radiation detectors are mounted to a flexible base or a base molded in advance so as to conform to the shape of an inspection target, thereby efficiently inspecting a narrow inspection target having a complicated shape.

As described above, according to Embodiment 1, a thin radiation detector that can be deformed to conform to the shape of an inspection target can be used to obtain a radioactive contamination inspection device capable of efficiently inspecting a narrow site or an object having a complicated shape.

### Embodiment 2.

Embodiment 1 has been described above on the assumption that the detector is manually set. In Embodiment 2, a radioactive contamination inspection device including a control mechanism for specifying an insertion position of the detector is described.

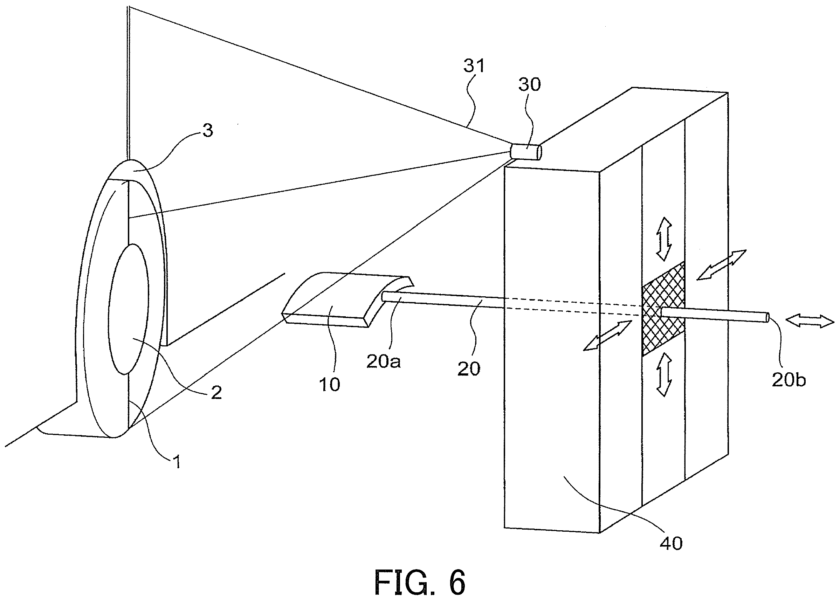

Fig. 6 is a diagram illustrating a configuration of the radioactive contamination inspection device in Embodiment 2 of this invention. The radioactive contamination inspection device in Embodiment 2 includes a detector unit 10, an arm 20, a laser distance meter 30, and a driving control device 40. Although not shown in Fig. 6, the driving control device 40 includes a signal processing unit 41, a driving control unit 42, and a measurement unit 43.

The detector unit 10 is a detector for quantitatively measure a radioactive contamination amount of an inspection target. The detectors 11 to 15 in Embodiment 1 described above correspond to the detector unit 10.

The arm 20 has one end 20a to which the detector unit 10 is mounted. On the other hand, the arm 20 has the other end 20b mounted so as to pass through the driving control device 40.

The laser distance meter 30 is a sensor that is mounted to an upper part of the driving control device 40 to measure the shape of measurement target. Fig. 6 illustrates a state in which laser 31 is applied from the laser distance meter 30 toward a tire 1, a wheel 2, and a wheel well 3 to be measured.

The signal processing unit 41 in the driving control device 40 has a function of reconstructing a 3D shape of the measurement target on the basis of the measurement result from the laser distance meter 30. The driving control unit 42 in the driving control device 40 has a configuration and a function capable of driving and controlling the positions of the detector unit 10 and the arm 20 in the vertical direction, the horizontal direction, and the depth direction of the measurement target on the basis of the reconstructed 3D shape of the measurement target.

In addition, the measurement unit 43 has a function of processing a signal from the detector unit 10 to quantitatively evaluate the radiation amount.

As illustrated in Fig. 6, when a measurement target is a wheel well of a vehicle, the signal processing unit 41 determines the positions of a tire and the wheel well on the basis of data from the laser distance meter 30, and the driving control unit 42 inserts the detector unit 10 to a desired region for measurement.

Means for measuring the distance to a surface to be measured is not limited to the laser distance meter 30. Any means capable of measuring the distance to a surface to be measured with necessary accuracy, such as a stereo camera, a contact sensor, and an ultrasound sensor, can be used.

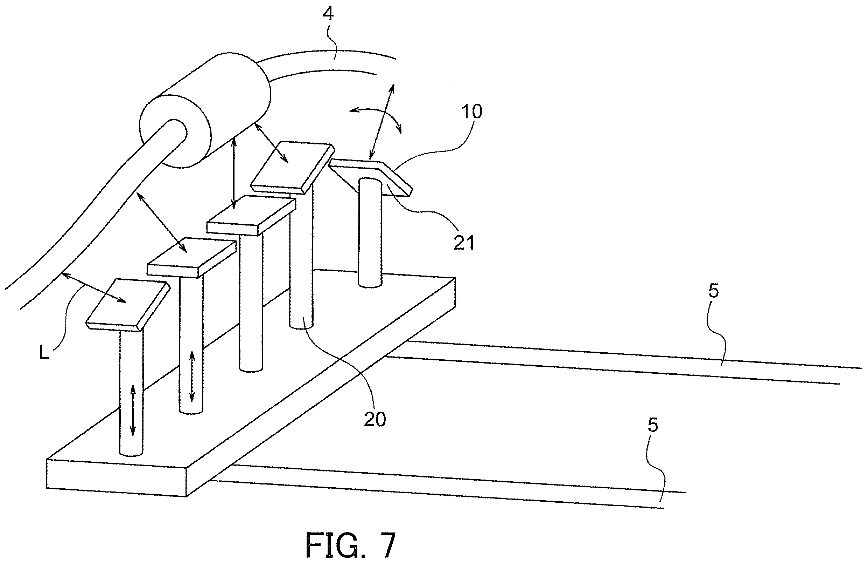

Fig. 7 is a diagram illustrating another configuration of the radioactive contamination inspection device in Embodiment 2 of this invention. Fig. 7 illustrates a case where a measurement target is a lower part of a vehicle body (that is, region C described in Embodiment 1 above). In general, the lower part of the vehicle is not a flat surface, but, for example, there is a measurement target having a complicated shape, such as an exhaust pipe 4. Thus, if the position of the detector unit 10 is fixed, the detection sensitivity may fluctuate.

Thus, in Fig. 7, a swingable hinge 21 is provided as a configuration that enables an arm 20 supporting the detector unit 10 to be moved such that a distance L from the measurement target to the detector unit 10 is constant, thereby suppressing the fluctuation in detection sensitivity. The shape of the lower part of the vehicle reconstructs a 3D shape similarly to the case described above with reference to Fig. 6.

Even when the position of the detector unit 10 is fixed, by calculating the surface contamination concentration on the basis of detection sensitivity at the farthest distance in a viewing angle of the detector unit 10, contamination can be found without fail. Thus, even when a method of fixing the detector is used, the presence/absence of contamination can be determined.

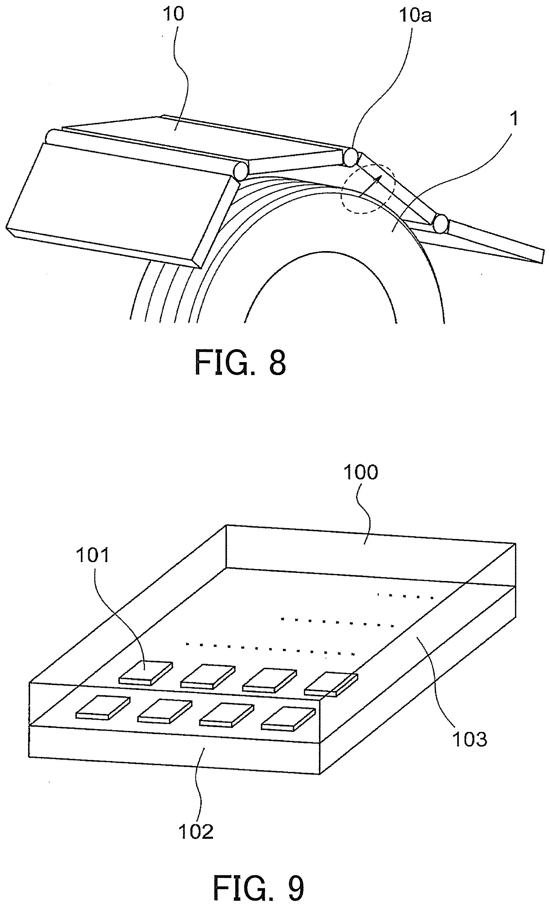

Fig. 8 is a diagram illustrating a configuration example of the detector unit 10 in Embodiment 2 of this invention. As illustrated in Fig. 8, the detector unit 10 may employ a structure for holding the detector unit 10 to the arm 20 by using a swingable hinge 10a. Such a structure enables the detector unit 10 to face the tire surface or the ground surface or be inclined obliquely, thereby performing measurement conforming to the shape of the lower part of the vehicle body.

Fig. 7 illustrates a case where the lower part of the vehicle is scanned while the driving control device 40 having the plurality of detector units 10 mounted thereon moves on rails 5. However, the lower part of the vehicle can be scanned similarly to the case of Fig. 7 even by fixing the driving control device 40 having the detector units 10 and causing a vehicle to pass above the driving control device 40 having the detector units 10 by traveling itself or using external force such as traction.

Fig. 9 is a diagram illustrating a configuration example of the detector unit 10 used in Embodiment 2 of this invention. In the detector unit 10, as illustrated in Fig. 9, semiconductor elements 101 can be arranged in an array to form a semiconductor array 100 serving as a planar detector.

The semiconductor elements 101 are arranged on a circuit board 102 and covered with an electromagnetic shield casing 103. Depending on the number of the semiconductor elements 101, for example, a sensitive surface having a size of about 10 cm × 10 cm can be formed. By increasing the number of the semiconductor elements 101, a larger sensitive surface can be formed.

The size of the sensitive surface may be determined such that the fluctuation in distance to a surface to be measured does not affect the detection sensitivity with respect to the shape of an assumed measurement target, for example, the radius of curvature of the tire for the wheel well.

As a signal processing method for the semiconductor array, the respective semiconductor elements 101 can be connected to individual preamplifiers. A plurality of semiconductor elements 101 can be collectively connected to one preamplifier. In the case where a plurality of semiconductor elements 101 are simply connected in parallel, a DC component of dark current is added, and hence noise increases.

As the semiconductor element 101, not only a silicon diode but also a chemical semiconductor such as CdTe can be used. The semiconductor element 101 may have either of an ohmic junction and a Schottky barrier junction. The thickness of the semiconductor element 101 is determined by an air dose at a measurement location and energy of a radiation from a measurement target.

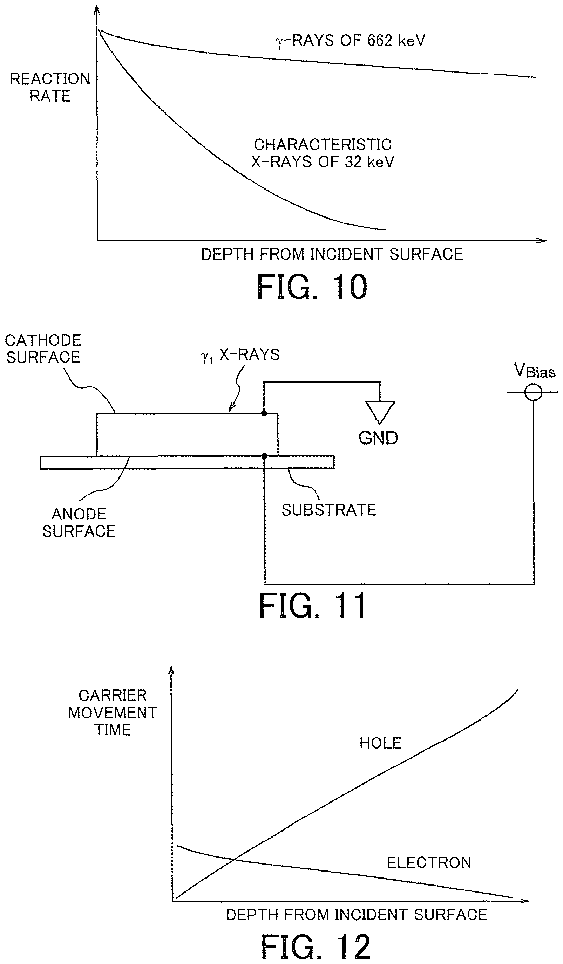

When a radioactive substance of the measurement target is radioactive cesium, not only γ-rays of 662 keV but also characteristic X-rays of 32 keV are radiations to be measured. Fig. 10 is a diagram illustrating a relation between the depth from an incident surface and reflectivity in a case where a measurement target is radioactive cesium in Embodiment 2 of this invention.

As illustrated in Fig. 10, when characteristic X-rays are measured, most of the characteristic X-rays are reacted near the incident surface, but γ-rays of 662 keV have small depth dependency of the reaction rate. Thus, the detection sensitivity can be optimized by selecting the thickness of semiconductor in accordance with energy of a radiation to be measured.

Fig. 11 is a circuit diagram when CdTe is employed as the semiconductor element 101 in Embodiment 2 of this invention. In the semiconductor element 101 such as CdTe, the mobility is greatly different between carriers (electrons and holes) generated by mutual actions with a radiation. In many cases, the mobility of holes is small, and hence a radiation is caused to enter from a cathode surface serving as a negative electrode such that holes easily reach the cathode as illustrated in Fig. 11.

Pulses output from the detector unit 10 are input to the subsequent signal processing unit 41. The signal processing unit 41 selectively counts only a radiation in an energy region of the measurement target.

The energy region is selected by a method of using an energy window capable of selecting only pulses having a pulse height in a predetermined range or a method of using a filter based on difference in pulse waveform.

Fig. 12 is a diagram illustrating an example of a relation between a carrier generation position (depth from incident surface) and a movement time for carriers to reach the electrode in Embodiment 2 of this invention. As illustrated in Fig. 12, the time for holes to reach the cathode when carriers are generated near the anode is significantly longer than the time for electrons to reach the anode when carriers are generated near the cathode.

When a radiation is made incident from the cathode, most of characteristic X-rays of 32 keV are reacted near the cathode, and hence electrons and holes both have shorter arrival times at the electrodes. On the other hand, γ-rays of 662 keV are reacted even at a very deep position near the anode, and hence in particular, it takes a longer time for holes to reach the electrode.

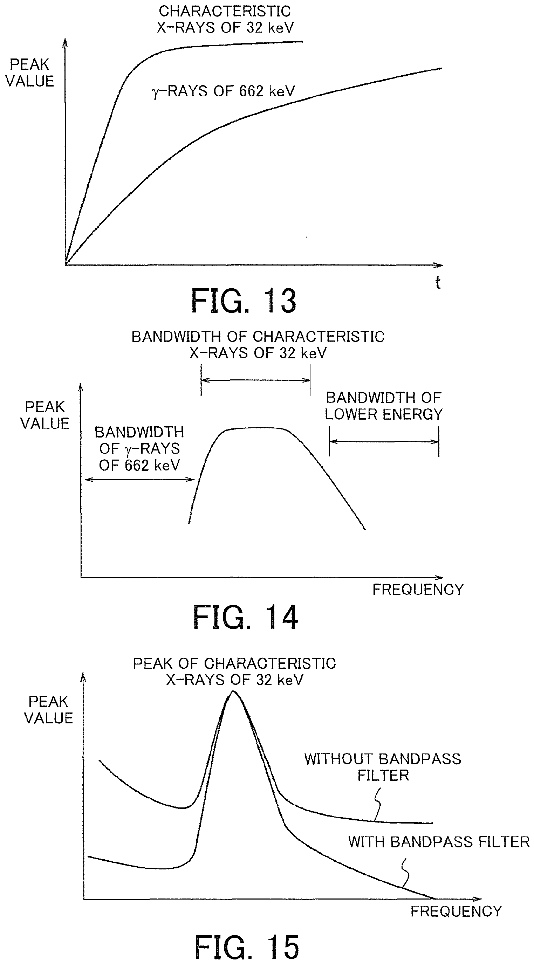

Fig. 13 is a diagram illustrating characteristics of an output pulse from the semiconductor element 101 in Embodiment 2 of this invention. The vertical axis represents a pulse height value indicating X-ray energy, and the horizontal axis represents time. As illustrated in Fig. 13, the rising time of an output pulse from the semiconductor element 101 upon the detection of a radiation tends to be delayed more in γ-rays of 662 keV than in characteristic X-rays of 32 keV. That is, the output pulse becomes a slow pulse.

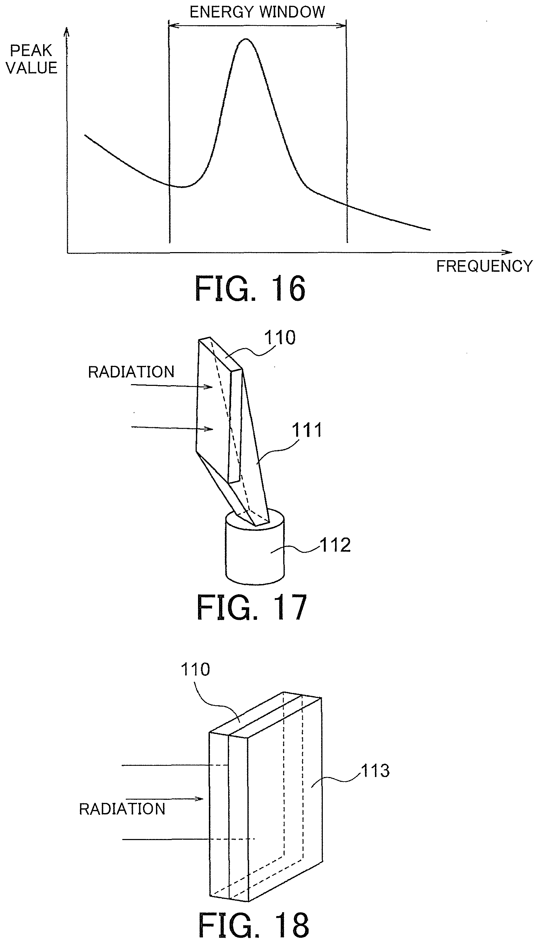

Fig. 14 is a diagram illustrating frequency characteristics of a bandpass filter in Embodiment 2 of this invention. Further, Fig. 15 is a diagram illustrating an energy region of the semiconductor element 101 after passing through the bandpass filter in Embodiment 2 of this invention. Further, Fig. 16 is a diagram illustrating a commonly-used energy window. In Fig. 14 to Fig. 16, the vertical axis represents a pulse height value indicating X-ray energy, and the horizontal axis represents the frequency.

As illustrated in Fig. 14, frequency characteristics of the subsequent amplification circuit can be adjusted to a frequency bandwidth corresponding to an energy region of characteristic X-rays of 32 keV by using the bandpass filter. As a result, as illustrated in Fig. 15, the sensitivity to energy regions other than the peak of the characteristic X-ray of 32 keV can be reduced.

As described above, by using the bandpass filter to adjust the frequency characteristics to a frequency bandwidth corresponding to a particular energy region, the sensitivity for regions other than the particular energy region can be reduced. This means that a general energy window as illustrated in Fig. 16 is unnecessary, which can reduce the physical quantity of the subsequent signal processing unit 41.

In either of the case where a bandpass filter is used and the case where an energy window is used, only a radiation in an energy region to be measured can be selectively counted. Thus, the signal processing unit 41 selectively counts only a radiation in an energy region to be measured, and transfers a coefficient value to the measurement unit.

The measurement unit 43 calculates, on the basis of the counted value of only a radiation in the energy region to be measured, a radioactive concentration of the surface to be measured from detection sensitivity determined by the distance from the detector unit 10 to the surface to be measured and a background count rate.

For the detection sensitivity, sensitivity at a distance in a predetermined range is determined in advance by physical calculation, and is stored in the measurement unit 43 as a data table. The background can be measured before the measurement of the measurement target, and can be determined by arithmetic operation from an air dose rate.

By inputting a reference value of radioactive concentration (surface contamination density), the measurement unit 43 can generate a warning when the radioactive concentration of the surface to be measured is equal to or larger than the reference value. The measurement unit 43 can record a contaminated position and displays the contaminated position on a display unit.

As described above, according to Embodiment 2, the thin detector unit can be inserted to an appropriate position on the basis of a 3D shape of a measurement target that is reconstructed on the basis of measurement results of distances to the measurement target. As a result, a narrow site and an object having a complicated shape can be efficiently inspected.

### Embodiment 3.

Embodiment 3 is different from Embodiment 2 described above only in that a scintillator is used as the detector unit 10 to detect a radiation instead of using a semiconductor element sensitive to a radiation.

The scintillator may be an organic scintillator such as a plastic scintillator, and may be an inorganic scintillator such as sodium iodide and cesium iodide.

In the case where a scintillator is used as the detector unit 10, by thinning an incident window to such a degree that can transmit α-rays and β-rays, α-rays and β-rays emitted from radioactive substances adhering on the surface to be measured can be directly measured.

Fig. 17 is a diagram illustrating a configuration example when a scintillator 110 is used as the detector unit 10 in Embodiment 3 of this invention. When the scintillator 110 is used as the detector unit 10, scintillation light generated upon the detection of a radiation is detected by a light receiving element 112, and hence a light guide 111 for condensing the scintillation light is needed. In this case, by employing a light guide shape as illustrated in Fig. 17, the detector unit 10 can be inserted in a narrow gap such as a wheel well of a vehicle.

Fig. 18 is a diagram illustrating another configuration example when the scintillator 110 is used as the detector unit 10 in Embodiment 3 of this invention. When the light guide 111 is not used, as illustrated in Fig. 18, a thin plate-shaped light receiving element 113 such as a photodiode array is optically coupled to a plate-shaped scintillator 110. In this manner, the detector unit 10 can be inserted in a narrow gap such as the wheel well 3 of the vehicle.

As described above, Embodiment 3 can provide the same effects as in Embodiments 1 and 2 described above even when a scintillator instead of a semiconductor element is used as a detector.

### Embodiment 4.

Embodiment 4 is different from Embodiment 3 described above only in that the detector unit 10 is formed of a flexible scintillator. The detector unit itself can be bent, and hence it is unnecessary to connect a plurality of detector units 10. As a result, the detector unit itself can be made conform to the shape of a surface to be measured.

As specific examples, flexible light guides such as jelly and oil can be used. Even when the light guide is not flexible, the scintillator and the light guide can be optically coupled with a flexible material so that the detector unit can be made conform to a complicated shape without degrading collection efficiency of scintillation light. This method can further reduce the fluctuation in distance.

Embodiments 1 to 4 have been described for the case where a physical amount to be measured is surface contamination density. However, the use of a semiconductor element or a scintillator as the detector unit 10 enables radioactive concentration (Bq/kg) including the inside of a measurement target to be measured.

Thus, the measurement target is not limited to a vehicle whose surface can be contaminated, and may be a measurement target for which internal radioactive concentration needs to be measured because the measurement target absorbs radioactive substances inside, such as agricultural crops and trees.

Detection sensitivity in this case is determined by physical calculation in consideration of not only the geometric shape and the distance to a detector but also the size and density of a measurement target. Also by using a radiation source that simulates a measurement target, the radioactive concentration inside the measurement target can be determined.

When a radioactive substance to be measured is radioactive cesium, the contaminated state of a surface to be measured can be detected with high accuracy by measuring characteristic X-rays. To detect the characteristic X-rays, a shielding structure, which is required for detecting γ-rays, is not needed. Thus, by specializing in detecting characteristic X-rays, radioactive contamination of the surface of a transport vehicle can be detected with high accuracy with a simple structure.

## Claims

1. A radioactive contamination inspection device, comprising:
a detection unit (10) having a sensitive surface that has a shape conforming to a shape of an object surface, which is a measurement target and a radioactive contamination amount of which is to be measured;
a mechanism unit (20) for holding the detection unit (10) in a state in which a distance from the sensitive surface to the object surface falls within a desired range set in advance; and
a measurement unit (40) for calculating the radioactive contamination amount of the object surface on the basis of a measurement result from the detection unit (10),
wherein when a distance from the sensitive surface to the object surface is not constant, the measurement unit (40) calculates the radioactive contamination amount by fixing a position of the sensitive surface and setting detection sensitivity on the basis of a distance from the sensitive surface to a farthest object surface, within a measurement range.

2. The radioactive contamination inspection device according to claim 1, further comprising:
a display unit for displaying the measurement result; and
a storage unit for recording the measurement result therein, wherein
the measurement unit (40) records the calculated radioactive contamination amount in the storage unit as the measurement result and displays the calculated radioactive contamination amount on the display unit, and further issues a warning when it is determined that the radioactive contamination amount exceeds a reference value set in advance.

3. The radioactive contamination inspection device according to claim 1 or 2, wherein the sensitive surface of the detection unit (10) is formed as a plurality of sensitive surfaces, and the detection unit (10) has a structure capable of individually deforming the plurality of sensitive surfaces such that a distance from the object surface falls within the desired range, so as to conform to a shape of the object surface.

4. The radioactive contamination inspection device according to claim 3, wherein
the detection unit (10) has a distance meter for measuring the distance from the sensitive surface to the object surface, and
the mechanism unit (20) holds the detection unit (10) in a state in which the distance falls within the desired range on the basis of a measurement result from the distance meter.

5. The radioactive contamination inspection device according to any one of claims 1 to 4, wherein
the measurement target is a tire surface and a wheel well surface of a vehicle that evacuates from a controlled area, and
the detection unit (10) is held by the mechanism unit (20) in a state in which a distance to the measurement target falls within the desired range.

6. The radioactive contamination inspection device according to any one of claims 1 to 5, wherein the detection unit (10) is formed of semiconductor elements (101) arranged in an array.

7. The radioactive contamination inspection device according to any one of claims 1 to 5, wherein the detection unit (10) is formed of a scintillator (110).

8. The radioactive contamination inspection device according to claim 7, wherein the scintillator (110) forming the detection unit (10) is flexible.

9. The radioactive contamination inspection device according to any one of claims 1 to 8, further comprising:
a surface shape measurer (30) for measuring a distance to the measurement target in order to specify an installation location of the detection unit (10); and
a signal processor (41) for reconstructing a 3D shape of the measurement target on the basis of a measurement result from the surface shape measurer (30), and performing information processing for specifying the installation location of the detection unit (10).

10. The radioactive contamination inspection device according to claim 9, further comprising a driving control unit for controlling, on the basis of the 3D shape reconstructed by the signal processor (41), a position of the mechanism unit (20) to which the detection unit (10) is mounted such that a distance from the object surface falls within the desired range.

11. The radioactive contamination inspection device according to any one of claims 1 to 10, wherein the measurement unit (40) includes a measurement circuit for observing a wave height or a waveform of a pulse output from the detection unit (10) when a radiation is detected, selecting a pulse height or a waveform corresponding to a radiation from the measurement target, and selectively measuring the radiation from the measurement target.

12. The radioactive contamination inspection device according to claim 11, wherein the measurement circuit has frequency characteristics adjusted to a frequency bandwidth of a pulse output from the detection unit (10) when the radiation from the measurement target is detected, and reduces sensitivity for other than the radiation from the measurement target, thereby selectively measuring the radiation from the measurement target.

13. The radioactive contamination inspection device according to any one of claims 1 to 12, wherein the detection unit (10) detects characteristic X-rays emitted from a surface of the measurement target.
